# EUROPÄISCHE PATENTANMELDUNG

(11) **EP 4 792 991 A1**
(43) Veröffentlichungstag der Anmeldung: **19.08.2026**
(21) Anmeldenummer: 25157341.6
(22) Anmeldetag: 12.02.2025
(51) Int. Cl.: B25J 5/00, B25J 11/00, B25J 18/02, B25J 19/02, B25J 9/16

(54) **BAUMASCHINENSYSTEM MIT EINEM BAUROBOTER UND EINER STEUERUNGSVORRICHTUNG**

(71) Anmelder: Hilti Aktiengesellschaft, 9494 Schaan (LI)
(72) Erfinder: Lukic, Sasha, 9470 Buchs (CH); Milito, Claudio, 6822 Schnifis (AT)
(74) Vertreter: Hilti Aktiengesellschaft Corporate Intellectual Property

(57) **Zusammenfassung**

Die Erfindung betrifft ein Baumaschinensystem (10), umfassend einen Bauroboter (12), wobei der Bauroboter (12) eine Fahrplattform (16), eine Hubvorrichtung (18), an dem ein Werkzeug (22) anordenbar und / oder angeordnet ist, sowie wenigstens zwei an der Hubvorrichtung (18) angeordnete Lichtsensoren (24, 26, 28) umfasst. Sie ist dadurch gekennzeichnet, dass das Baumaschinensystem (10) eine Steuerungsvorrichtung (14) aufweist, die einen Flächenlaser (34) und einen Distanzmesser (36, 42) umfasst, wobei die Steuerungsvorrichtung (14) eingerichtet ist, mit dem Distanzmesser (36, 42) wenigstens eine Distanz (d1, d2) zum Bauroboter (12), insbesondere zur Hubvorrichtung (18), zu einer an der Hubvorrichtung (18) montierten Werkzeugmaschine (20) und / oder zu einem an der Werkzeugmaschine (20) angeordneten Werkzeug (22) zu messen, wobei die Steuerungsvorrichtung (14) eingerichtet ist, mit dem Flächenlaser (34) eine Lichtebene (E) zu erzeugen, und wobei der Bauroboter (12) eingerichtet ist, seine Hubvorrichtung (18) entlang der Lichtebene (E) auszurichten. Das Baumaschinensystem (10) ermöglicht eine kostengünstige, komfortable und dennoch präzise Ausführung von Bauarbeiten.

## Beschreibung

Die vorliegende Erfindung betrifft ein Baumaschinensystem, das einen Bauroboter umfasst. Der Bauroboter umfasst eine Fahrplattform, eine Hubvorrichtung sowie wenigstens zwei an der Hubvorrichtung angeordnete Lichtsensoren. An der Hubvorrichtung ist ein Werkzeug anordenbar und / oder angeordnet.

### Stand der Technik

EP4403317A1 beschreibt einen Bauroboter. Der Bauroboter kann sich entlang einer vertikalen Lichtebene ausrichten. Mithilfe eines Distanzmessers kann er einen Abstand zu einer Wand oder dergleichen messen.

Mithilfe eines am Bauroboter montierten Prismas und in Verbindung mit einer Totalstation kann eine Position und / oder eine Lage des Bauroboters ermittelt werden.

### Offenbarung der Erfindung

Bauarbeiten weisen allgemein sehr hohe Unfallrisiken auf. Es kommt immer wieder zu schweren Unfällen, beispielsweise im Hochbau oder Tiefbau. Darüber hinaus können manche Arten von Bauarbeiten auf Dauer körperlich sehr belastend für Bauarbeiter sein. Dies betrifft beispielsweise Arbeiten an hohen Decken und allgemein Über-Kopf-Arbeiten.

Um solchen Gefahren zu begegnen sowie auch zur allgemeinen Gesundheitsprävention der Bauarbeiter kommen vermehrt Bauroboter zum Einsatz.

Eine der Schwierigkeiten beim Einsatz von Baurobotern ist jedoch, dass die Bauroboter mit hoher Präzision ausgerichtet und positioniert werden müssen, sodass sie Arbeitspositionen, an denen sie Bauarbeiten ausführen sollen, mit ausreichend hoher Präzision erreichen.

Bereits geringe Positionierungsfehler können weit reichende Folgen nach sich ziehen. Beispielsweise können bei relativ zueinander ungenau positionierten Bohrlöchern Bauteile, z. b. Deckenelemente, nicht mehr ordnungsgemäß mithilfe der Bohrlöcher fixiert werden.

Bei dem vorangehend genannten, bekannten Bauroboter kann zur Erreichung der erforderlichen Positioniergenauigkeit eine Totalstation verwendet werden.

Totalstationen sind jedoch sehr teuer in der Anschaffung und zeitaufwändig in der Nutzung. Eine Positionierung mithilfe von Totalstationen ist schon dadurch mit hohen Kosten verbunden. Dies insbesondere dann, wenn die Totalstation für eine Vielzahl von Positionierungen, beispielsweise für eine Serie von herzustellenden Bohrlöchern, benötigt wird.

Der aus dem oben genannten Stand der Technik bekannte Bauroboter kann für die Ausmessung einer solchen Serie zwar auch ohne Totalstation genutzt werden, benötigt dann allerdings Kenntnis über den Verlauf von beispielsweise umliegenden Wänden, um aus einem Abstand zu einer solchen umliegenden Wand auf seine Position in beispielsweise einem Raum zu schließen.

Aufgabe der vorliegenden Erfindung ist es daher, eine Vorrichtung mit einem Bauroboter anzubieten, die eine kostengünstige, komfortable und präzise Möglichkeit zur Ausführung von Bauarbeiten bietet.

Gelöst wird die Aufgabe durch ein Baumaschinensystem, umfassend einen Bauroboter, wobei der Bauroboter eine Fahrplattform, eine Hubvorrichtung, an dem ein Werkzeug anordenbar und / oder angeordnet ist, sowie wenigstens zwei an der Hubvorrichtung angeordnete Lichtsensoren umfasst, wobei das Baumaschinensystem eine Steuerungsvorrichtung aufweist, die einen Flächenlaser und einen Distanzmesser umfasst, wobei die Steuerungsvorrichtung eingerichtet ist, mit dem Distanzmesser wenigstens eine Distanz zum Bauroboter, insbesondere zur Hubvorrichtung, zu einer an der Hubvorrichtung montierten Werkzeugmaschine und / oder zu einem an der Werkzeugmaschine angeordneten Werkzeug, zu messen, wobei die Steuerungsvorrichtung eingerichtet ist, mit dem Flächenlaser eine Lichtebene zu erzeugen, und wobei der Bauroboter eingerichtet ist, seine Hubvorrichtung entlang der Lichtebene auszurichten.

Die Steuerungsvorrichtung kann mit Hilfe des Flächenlesers eine Lichtebene erzeugen. Um beispielsweise Bauarbeiten an einer Decke auszuführen, kann die Lichtebene vertikal ausgerichtet sein. Dann kann sich der Bauroboter entlang der Lichtebene ausrichten, sodass er, dem Beispiel von Bauarbeiten an der Decke weiter folgend, Arbeitspositionen entlang der Schnittlinie der Lichtebene mit der Decke erreichen kann.

Um nun entlang der Schnittlinie die Arbeitspositionen zu bestimmen, an denen die Bauarbeiten schlussendlich auszuführen sind, kann mit Hilfe des Distanzmessers eine Distanz zwischen der Steuerungsvorrichtung und dem Bauroboter gemessen werden. Sind beispielsweise Bauarbeiten, wie beispielsweise Bohrarbeiten, Schneidarbeiten oder Oberflächenbehandlungen wie beispielsweise Schleifarbeiten, in regelmäßigen Abständen auszuführen, beispielsweise entlang der Schnittlinie alle 10 cm Löcher zu bohren, dann kann der Bauroboter entlang der Lichtebene gefahren werden. Mithilfe des Distanzmessers kann gemessen und überwacht werden, wann der Bauroboter oder zumindest ein an diesem montiertes Werkzeug die jeweils nächste Arbeitsposition entlang der Schnittlinie erreicht.

Dabei ist vorteilhaft, dass der Distanzmesser an der Steuerungsvorrichtung angeordnet ist. Damit kann der Distanzmesser exakt entlang der Lichtebene Distanzen zwischen der Steuerungsvorrichtung und dem Bauroboter messen.

Es ist nicht erforderlich, dass sich eine Wand oder dergleichen in der Nähe des Bauroboters befindet. Es ist insbesondere auch keine Kenntnis über die den Bauroboter umgebenden Wände oder allgemein einer umgebenden Baugeometrie notwendig. Beispielsweise ist es nicht erforderlich zu wissen, wo genau sich eine benachbarte Wand befindet und in welche Richtung sie verläuft.

Der Distanzmesser kann eingerichtet sein, Distanzen in einer vertikalen Richtung zu messen. Dazu kann er eine digitale Wasserwaage umfassen. Mit Hilfe der Wasserwaage kann er seinen Messstrahl vertikal ausrichten. Denkbar ist auch, dass eine Laserlichtquelle des Distanzmessers schwimmend gelagert ist, sodass sie sich Schwerkraft-getrieben selbsttätig vertikal ausgerichtet.

Ferner kann auf eine Totalstation zur Positionierung des Bauroboters auf einzelne Arbeitspositionen verzichtet werden.

Denkbar ist beispielsweise, dass zu Beginn einer Serie von auszuführenden Bauarbeiten die Steuerungsvorrichtung, beispielsweise mithilfe einer eingemessenen Totalstation, positioniert und ausgerichtet wird. Dann kann eine Vielzahl von Arbeitspositionen entlang der Verbindungsrichtung zwischen dem Bauroboter und der Steuerungsvorrichtung präzise angefahren werden, ohne dass dazu eine Totalstation erforderlich wäre. So können Kosten für die Nutzung der Totalstation weiter eingespart werden. Auch können die Arbeitspositionen sehr schnell nacheinander angefahren werden, da Messungen mit einem einzelnen Distanzmesser naturgemäß erheblich schneller erfolgen können als mit einer Totalstation, die neben Distanzmessungen auch eine Vielzahl weiterer Messungen, beispielsweise Winkelmessungen, vollziehen muss. Darüber hinaus können die Arbeitspositionen entlang der Lichtebene mit besonders hoher Präzision erreicht werden, da die Positionierung des Bauroboters nicht oder nur in geringem Maße von den tatsächlichen Gegebenheiten auf der Baustelle abhängt. So wirken sich Positionierungsfehler von Bauelementen im Ist im Vergleich zu einem Plan nicht oder lediglich geringfügig auf die Ermittlung der Arbeitsposition entlang der Lichtebene aus, da die Arbeitspositionen stets relativ zur Steuervorrichtung, und nicht beispielsweise relativ zu einer geplanten und gefertigten Wand, entlang der Lichtebene ermittelt werden.

Auch ist es von Vorteil, dass sich der Distanzmesser an der Steuervorrichtung befindet, da dadurch sichergestellt werden kann, dass der Distanzmesser tatsächlich eine Distanz zum Bauroboter und nicht beispielsweise zu einem anderen Objekt im Raum misst, sobald der Bauroboter sich mithilfe seiner Lichtsensoren entlang der Lichtebene ausgerichtet hat. Dabei kann ausgenutzt werden, dass der Distanzmesser durch eine feste Anordnung an der Steuervorrichtung in einem festen Verhältnis zur Ausrichtung der Lichtebene, beispielsweise parallel zur Lichtebene, messen kann.

Der Bauroboter kann zur Ausführung von Bauarbeiten auf einer Hochbau-Baustelle und / oder einer Tiefbau-Baustelle eingerichtet sein.

Die Steuervorrichtung kann eingerichtet sein, die Lichtebene vertikal zu erzeugen. Richtet sich der Bauroboter dann entlang der Lichtebene aus, so kann die Hubvorrichtung ebenfalls vertikal oder zumindest in einem bekannten Winkel zur Vertikalen ausgerichtet sein. Auch kann ein Umkippen des Bauroboters während der Ausführung der Bauarbeiten vermieden werden.

An der Hubvorrichtung kann ein Neigungssensor angeordnet sein. Durch Ausrichtung entlang der Lichtebene kann die Hubvorrichtung bereits in einer Ebene senkrecht zur Lichtebene ausgerichtet werden. Es verbleibt jedoch ein Freiheitsgrad für Neigungen in Richtung der Lichtebene. Dieser Freiheitsgrad kann durch den Neigungssensor überwacht werden. Die Hubvorrichtung kann somit in der Ebene der Lichtebene auf einen durch den Neigungssensor überwachbaren Neigungswinkel eingestellt werden. Somit kann insgesamt die Ausrichtung der Hubvorrichtung in allen Raumrichtungen präzise eingestellt werden. Beispielsweise kann dadurch sichergestellt werden, dass Bohrlöcher in die beispielhaft beschriebene Decke senkrecht oder zumindest innerhalb eines zulässigen Winkelbereichs schräg zur Decke gebohrt werden.

Der Distanzmesser der Steuerungsvorrichtung kann auf einer Höhe der Hubvorrichtung des Bauroboters angeordnet sein. Insbesondere kann der Distanzmesser derart an der Steuerungsvorrichtung angeordnet sein, dass er bei ordnungsgemäßem Aufbau des Baumaschinensystems, beispielsweise auf einer Baustelle, einen Messstrahl, insbesondere einen Laserstrahl, vertikal aussendet, der den Bauroboter im Bereich der Hubvorrichtung trifft. Somit kann mithilfe des Distanzmessers eine Distanz zwischen der Steuerungsvorrichtung und der Hubvorrichtung des Bauroboters gemessen werden. Die gemessene Distanz kann beispielsweise auch verwendet werden, um eine Neigung der Hubvorrichtung zu bestimmen.

An der Hubvorrichtung kann eine Werkzeugmaschine und / oder ein Werkzeug montiert werden. Diese sind üblicherweise starr mit der Hubvorrichtung verbunden. Damit ist es möglich, indirekt durch Messung der Distanz zur Hubvorrichtung auch eine Distanz zur Werkzeugmaschine und / oder dem Werkzeug zu messen.

Eine solche indirekte Messung kann Positionierungen auch in Bereichen ermöglichen, in denen keine direkte Sichtverbindung in beispielsweise der Nähe einer zu bearbeitenden Decke, beispielsweise aufgrund von vorab bereits installierten Installationselementen, besteht.

Denkbar ist, dass der Distanzmesser der Steuerungsvorrichtung auf einer Höhe einer an der Hubvorrichtung angeordneten Werkzeugmaschine angeordnet ist. Dadurch kann die Distanz zur Werkzeugmaschine und / oder einem in der Werkzeugmaschine aufgenommenen Werkzeug direkt gemessen werden. Eine solche direkte Messung kann noch präziser sein, da Messfehler beispielsweise aufgrund von Elastizitäten der Hubvorrichtung oder aufgrund von Spiel in Gelenken der Hubvorrichtung vermieden werden können.

Dies kann beispielsweise für eine frühe Bauphase auf einer Baustelle vorteilhaft sein, wenn beispielsweise in Decken Bohrlöcher zu bohren sind oder andere Bauarbeiten an Decken auszuführen sind, jedoch noch keine Installationselemente, Kabel, Leitungen und / oder dergleichen an den Decken montiert sind.

Weist die Steuerungsvorrichtung wenigstens zwei Distanzmesser auf, die eingerichtet sind, insgesamt wenigstens Distanzen zu zwei verschiedenen Punkten des Bauroboters zu messen, so kann der Neigungswinkel entlang der Lichtebene auch ohne weiteren Neigungssensor bestimmt werden. Der Neigungswinkel kann zudem dynamisch, insbesondere schnell und dennoch präzise, bestimmt werden, da die Messungen nicht den bei Neigungssensoren üblichen Einschwingvorgängen und dergleichen unterliegen.

Der Distanzmesser kann eingerichtet sein, eine Distanz parallel zur Lichtebene zu messen, sodass, sobald sich der Bauroboter entlang der Lichtebene mithilfe der Lichtsensoren ausgerichtet hat, besonders einfach sichergestellt werden kann, dass tatsächlich eine Distanz zwischen dem Bauroboter, und nicht anderen Objekten, und der Steuerungsvorrichtung gemessen wird.

Dabei kann unter einer parallelen Messung auch eine Messung entlang der Lichtebene verstanden werden.

Weiter ist denkbar, dass der Distanzmesser eingerichtet ist, eine Distanz zu einem der Lichtsensoren zu messen. Der Lichtsensor kann eine lichtempfindliche Fläche aufweisen. Somit kann auch festgestellt werden, wo oder ob der Messstrahl des Distanzmessers auf den Lichtsensor auftrifft. Auch dadurch kann sichergestellt werden, dass eine Distanz zwischen dem Bauroboter, und nicht anderen Objekten, und der Steuerungsvorrichtung gemessen wird. Insgesamt kann sich damit auch die Messgenauigkeit der Distanzmesser verbessern.

Dazu kann wenigstens einer der Lichtsensoren einen Zeilenlichtsensor oder ein Flächenlichtsensor sein. Eine lichtempfindliche Fläche wenigstens eines Lichtsensors kann dazu eine Sensorzeile oder eine Sensormatrix sein. Dadurch lässt sich der Bereich vergrößern, in dem festgestellt werden kann, ob oder dass der Messstrahl den Bauroboter erreicht.

Die Fahrplattform kann eingerichtet sein, einen Neigungswinkel einzustellen. Insbesondere kann sie eingerichtet sein, einen Neigungswinkel der Hubvorrichtung einzustellen. Dazu ist denkbar, dass die Fahrplattform drei oder mehr Räder aufweist. Die Räder können über Höhenverstellungen an der übrigen Fahrplattform angebunden sein. Durch Einstellen der Höhe der Höhenverstellungen kann dann die Fahrplattform im Bereich der Räder jeweils geneigt werden, sodass ein Neigungswinkel der Hubvorrichtung gegenüber beispielsweise einer Vertikalen eingestellt werden kann.

In einer Ausführungsform kann der Bauroboter ausgebildet sein, die Hubvorrichtung relativ zur Fahrplattform zu verschwenken. Insbesondere kann die Hubvorrichtung entsprechend des Neigungswinkels derart verschwenkt werden, dass sie sich im Wesentlichen vertikal erstreckt oder dass ein bestimmter Neigungswinkel eingestellt wird, damit das Werkzeug an die entsprechende Arbeitsposition ausgerichtet ist.

Zum Verschwenken der Hubvorrichtung kann zwischen Fahrplattform und Hubvorrichtung ein Gelenk vorgesehen sein. Zum Bewegen der Hubvorrichtung und somit Verschwenken über das Gelenk ist beispielsweise ein Antriebsmechanismus wie ein Motor an einer Achse des Gelenks und/ oder ein Kolben vorgesehen.

Besonders vorteilhaft kann es sein, wenn die Steuerungsvorrichtung fernsteuerbar ist. Insbesondere ist denkbar, dass wenigstens eine Lage und / oder Position der Steuerungsvorrichtung fernsteuerbar ist. Dann kann mittels Fernsteuerung der Verlauf der von der Steuerungsvorrichtung erzeugten Lichtebene eingestellt werden. Dazu kann ein Benutzer des Baumaschinensystems sich in einer Distanz von der Steuerungsvorrichtung befinden. An seiner Position kann er beispielsweise eine freie Sicht auf zu erreichende Arbeitspositionen haben. Durch die Fernsteuerung kann somit der Bedienungskomfort und auch die Effizienz des Baumaschinensystems weiter verbessert werden.

Die Steuerungsvorrichtung kann dazu wenigstens einen Stellmotor aufweisen. Der Stellmotor kann eingerichtet sein, die Lichtebene zu rotieren. Die Steuerungsvorrichtung kann auch einen Stellantrieb aufweisen, mit dem sie auf eine gewünschte Zielposition aus der Ferne positioniert werden kann.

Weitere Merkmale und Vorteile der Erfindung ergeben sich aus der nachfolgenden detaillierten Beschreibung eines Ausführungsbeispiels der Erfindung anhand der Figuren der Zeichnung, die erfindungswesentliche Einzelheiten zeigen, sowie aus den Ansprüchen.

Die einzelnen Merkmale können je einzeln für sich oder zu mehreren in beliebigen Kombinationen bei Varianten der Erfindung verwirklicht sein. In der schematischen Zeichnung sind Ausführungsbeispiele der Erfindung dargestellt, welche in der nachfolgenden Beschreibung näher erläutert werden.

### Kurze Beschreibung der Zeichnungen

Es zeigen:
- Fig. 1: ein Baumaschinensystem mit einem Distanzmesser auf einer Baustelle,
- Fig. 2: ein Baumaschinensystem mit einem Distanzmesser und einem Neigungssensor,
- Fig. 3: ein Baumaschinensystem mit einem Distanzmesser, der auf Höhe einer Werkzeugmaschine angeordnet ist,
- Fig. 4: ein Baumaschinensystem mit zwei Distanzmessern.

Zur Erleichterung des Verständnisses der Erfindung werden in der nachfolgenden Figurenbeschreibung für sich entsprechende Elemente jeweils die gleichen Bezugszeichen verwendet.

### Ausführungsformen der Erfindung

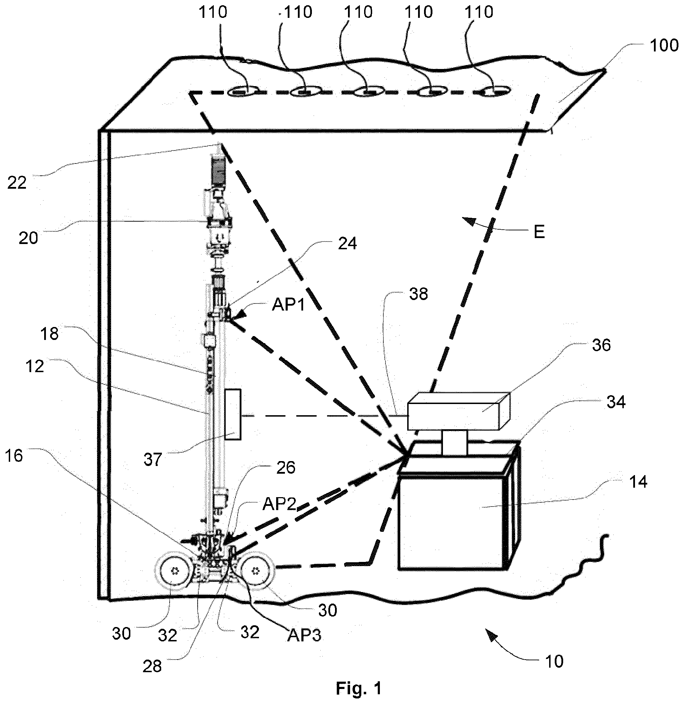

Fig. 1 zeigt eine schematische Darstellung eines Baumaschinensystems 10.

Das Baumaschinensystem 10 umfasst einen Bauroboter 12 und eine Steuerungsvorrichtung 14.

Der Bauroboter 10 umfasst eine Fahrplattform 16 und eine darauf angeordnete, Hubvorrichtung 18.

An der Hubvorrichtung 18 befindet sich eine Werkzeugmaschine 20 in Form einer Bohrhammermaschine mit einem Werkzeug 22 in Form eines Gesteinsbohrers.

Der Bauroboter 14 weist ferner insgesamt drei Lichtsensoren 24, 26, 28 auf. Die Lichtsensoren 24, 26, 28 sind als senkrecht zur Hubvorrichtung 18 angeordnete Zeilenlichtsensoren ausgebildet. Die Lichtsensoren 24, 26 befinden sich auf unterschiedlichen Höhen der Hubvorrichtung 18. Sie können somit Licht, das mittig zur Hubvorrichtung 18 oder bis zur Hälfte ihrer Länge seitlich der Hubvorrichtung 18 gerichtet ist, detektieren. Der Lichtsensor 28 ist an der Fahrplattform 16 und versetzt zu der durch die Lichtsensoren 24, 26 verlaufende Fluchtlinie angeordnet. Er kann somit entlang seiner Länge auf die Fahrplattform 16 gerichtetes Licht detektieren.

Die Steuerungsvorrichtung 14 weist einen Flächenlaser 34 auf, der eingerichtet ist, Laserlicht in einer Lichtebene E abzustrahlen. Dabei trifft es die Lichtsensoren 24, 26, 28 an Auftreffpunkten AP1, AP2 bzw. AP3. Ferner trifft es auf eine Decke 100.

Die Steuerungsvorrichtung 14 und damit die Lichtebene E sind derart ausgerichtet, dass die Schnittlinie der Lichtebene E mit der Decke 100 einer Linie bildet, entlang der sich Arbeitspositionen 110 befinden, an denen der Bauroboter 10 Bauarbeiten verrichten soll.

Die Fahrplattform 16 weist vier Räder 30 auf, die jeweils über Höhenverstellungen 32 an der Fahrplattform 16 angelenkt sind. Durch Verstellen der Höhenverstellungen 32 kann die Fahrplattform 16 die Hubvorrichtung 18 und damit die Werkzeugmaschine 20 mit ihrem Werkzeug 22 mit einem einstellbaren Neigungswinkel gegenüber einem Untergrund und / oder gegenüber einer Vertikalen schräg stellen.

Der Bauroboter 12 ist eingerichtet, anhand der Detektion und der Lage der Auftreffpunkte AP1, AP2 und AP3 sich zu positionieren und die Hubvorrichtung 18 in der Lichtebene E zu positionieren, sodass das Werkzeug 22 im Ergebnis mit Hilfe der Lichtebene E entlang der Schnittlinie der Ebene E mit der Decke 100 geführt wird.

An der Steuerungsvorrichtung 36 ist ein Distanzmesser 36 angeordnet, der eingerichtet ist, mit Hilfe eines in der Lichtebene E - und damit auch parallel zur Lichtebene E - verlaufenden und horizontal ausgerichteten Messstrahls 38 eine Distanz zwischen der Steuerungsvorrichtung 14 und dem Bauroboter 12, insbesondere zu einem an der Hubvorrichtung 18 befindlichen Ziel 37, zu messen. Das Ziel 37 kann einen Reflektor aufweisen. Bei einer alternativen Ausführungsform kann das Ziel 37 auch als Lichtsensor ausgebildet sein, sodass detektiert werden kann, ob der Messstrahl 38 auf das Ziel 37 auftrifft.

Insgesamt ist das Baumaschinensystem 10 eingerichtet, den Bauroboter 10 entlang der Lichtebene E und das Werkzeug 22 entlang der Schnittlinie zu führen. Anhand der durch den Distanzmesser 36 gemessenen Distanzen kann detektiert und überprüft werden, wann jeweils eine der Arbeitspositionen 110 erreicht wird. Sobald jeweils eine der Arbeitspositionen 110 erreicht wird, werden die dort auszuführenden Bauarbeiten ausgeführt. Im genannten Beispiel werden somit Bohrlöcher nacheinander an den Arbeitspositionen 110 gebohrt.

In den nachfolgenden Figuren werden weitere Ausführungsformen von Baumaschinensystemen 10 beschrieben, die, soweit jeweils nicht anders beschrieben, dem vorangehend beschriebenen Baumaschinensystem 10 entsprechen können. Es werden daher im Folgenden vorrangig Besonderheiten der jeweiligen Ausführungsformen näher erläutert.

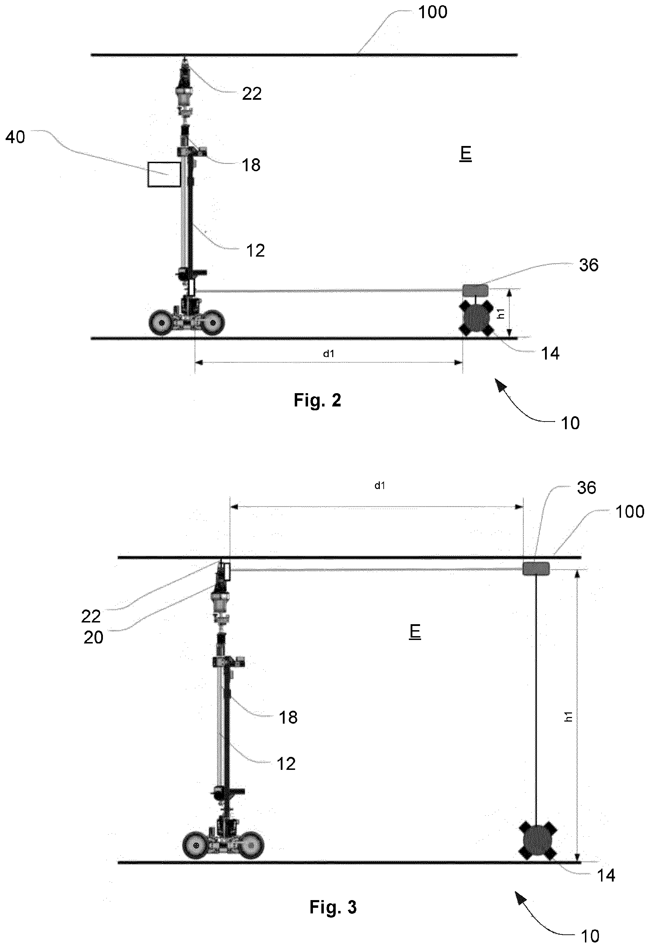

So zeigt Fig. 2 ein Baumaschinensystem 10, bei dem die Steuerungsvorrichtung 14 mit einem Distanzmesser 36 ausgestattet ist, der eine Distanz d1 zum Bauroboter 12 misst. Der Distanzmesser 36 befindet sich auf einer geringen Höhe h1, insbesondere auf Höhe eines unteren Endes der Hubvorrichtung 18 des Bauroboters 12.

Die Steuerungsvorrichtung 14 erzeugt eine Lichtebene E, die der Bildebene gemäß Fig. 2 entspricht.

Durch die geringe Höhe h1 können bereits geringe Neigungswinkel der Hubvorrichtung 18 gegenüber der Vertikalen entlang der Lichtebene E, also der Bildebene, zu relevanten Abweichungen der Position des Werkzeugs 22 gegenüber der Distanz d1 entsprechenden Position an der Decke 100 führen.

Um daher solche Positionsfehler detektieren und kompensieren zu können, weist der Bauroboter 12 einen Neigungssensor 40 auf, der mindestens Neigungen in der Lichtebene E gegenüber der Vertikalen messen kann.

Fig. 3 zeigt ein Baumaschinensystem 10, bei dem die Steuerungsvorrichtung 14 mit einem Distanzmesser 36 auf einer Höhe h1, die einer Höhe der Werkzeugmaschine 20 und damit auch des Werkzeugs 22 entspricht. Er befindet sich somit auch dicht unterhalb der Decke 100.

Der Distanzmesser 36 ist senkrecht über der übrigen Steuerungsvorrichtung 14 angeordnet.

Der Distanzmesser 36 kann somit eine horizontale Distanz d1 zwischen der Steuerungsvorrichtung 14 und der Werkzeugmaschine 20 messen. Neigungen der übrigen Hubvorrichtung 18 gegenüber der Vertikalen führen somit lediglich zu geringen Positionsfehlern. Diese Ausführungsform kann auch ohne Neigungssensor 40 ausgebildet sein.

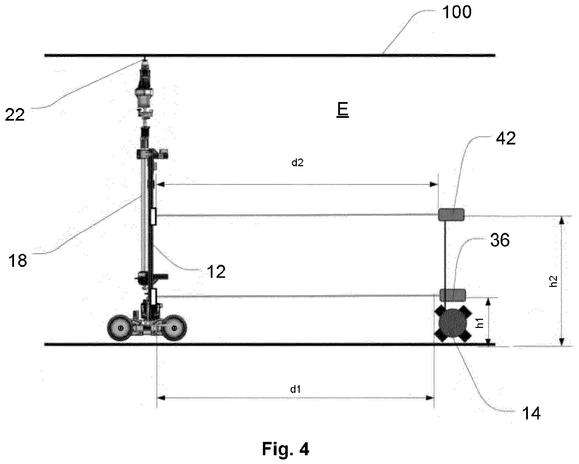

Fig. 4 zeigt eine Ausführungsform, bei der die Steuerungsvorrichtung 14 zwei Distanzmesser 36, 42 aufweist, die senkrecht über ihr in zwei unterschiedlichen Höhen h1 bzw. h2 angeordnet sind. Beide Distanzmesser messen wiederum entlang der Lichtebene E. Die Höhen h1, h2 können beide auf Höhe der Hubvorrichtung 18 liegen.

Die Distanzmesser 36, 42 können horizontale Distanzen d1 bzw. d2 zwischen ihnen und unterschiedlichen Punkten auf der Hubvorrichtung 18 messen.

Aus Differenzen der Distanzen d1 und d2 kann somit auf einen Neigungswinkel der Hubvorrichtung 18 gegenüber der Vertikalen in der Lichtebene E geschlossen werden. Damit ist diese Ausführungsform des Baumaschinensystems 10 eingerichtet, durch solche Neigungswinkel sich ergebende Positionsfehler bei der Ermittlung der tatsächlichen Position des Werkzeugs 22 und bei der Prüfung, ob eine der Arbeitspositionen 110 (siehe Fig. 2) erreicht ist, zu kompensieren.

### Bezugszeichenliste

- 10: Baumaschinensystem
- 12: Bauroboter
- 14: Steuerungsvorrichtung
- 16: Fahrplattform
- 18: Hubvorrichtung
- 20: Werkzeugmaschine
- 22: Werkzeug
- 24: Lichtsensor
- 26: Lichtsensor
- 28: Lichtsensor
- 30: Rad
- 32: Höhenverstellung
- 34: Flächenlaser
- 36: Distanzmesser
- 37: Ziel
- 38: Messstrahl
- 40: Neigungssensor
- 42: Distanzmesser
- 100: Decke
- 110: Arbeitsposition
- AP1: Auftreffpunkt
- AP2: Auftreffpunkt
- AP3: Auftreffpunkt
- h1: Höhe
- h2: Höhe
- d1: Distanz
- d2: Distanz
- E: Lichtebene
- Ende: Bezugszeichenliste

## Patentansprüche

1. Baumaschinensystem (10), umfassend einen Bauroboter (12),
wobei der Bauroboter (12) eine Fahrplattform (16), eine Hubvorrichtung (18), an dem ein Werkzeug (22) anordenbar und / oder angeordnet ist, sowie wenigstens zwei an der Hubvorrichtung (18) angeordnete Lichtsensoren (24, 26, 28) umfasst,
**dadurch gekennzeichnet,**
**dass** das Baumaschinensystem (10) eine Steuerungsvorrichtung (14) aufweist,
die einen Flächenlaser (34) und einen Distanzmesser (36, 42) umfasst, wobei die Steuerungsvorrichtung (14) eingerichtet ist, mit dem Distanzmesser (36, 42) wenigstens eine Distanz (d1, d2) zum Bauroboter (12), insbesondere zur Hubvorrichtung (18), zu einer an der Hubvorrichtung (18) montierten Werkzeugmaschine (20) und / oder zu einem an der Werkzeugmaschine (20) angeordneten Werkzeug (22) zu messen,
wobei die Steuerungsvorrichtung (14) eingerichtet ist, mit dem Flächenlaser (34) eine Lichtebene (E) zu erzeugen, und
wobei der Bauroboter (12) eingerichtet ist, seine Hubvorrichtung (18) entlang der Lichtebene (E) auszurichten.

2. Baumaschinensystem (10) nach dem vorhergehenden Patentanspruch,
**dadurch gekennzeichnet, dass** an der Hubvorrichtung (18) ein Neigungssensor (40) angeordnet ist.

3. Baumaschinensystem (10) nach einem der vorhergehenden Patentansprüche, **dadurch gekennzeichnet, dass** der Distanzmesser (36, 42) auf Höhe (h1, h2) der Hubvorrichtung (18) des Bauroboters (12) an der Steuerungsvorrichtung (14) angeordnet ist.

4. Baumaschinensystem (10) nach einem der vorhergehenden Patentansprüche, **dadurch gekennzeichnet, dass** der Distanzmesser (36, 42) auf Höhe (h1, h2) einer an der Hubvorrichtung (18) angeordneten Werkzeugmaschine (20) und / oder des Werkzeugs (22) angeordnet ist.

5. Baumaschinensystem (10) nach einem der vorhergehenden Patentansprüche, **dadurch gekennzeichnet, dass** die Steuerungsvorrichtung (14) wenigstens zwei Distanzmesser (36, 42) aufweist, die eingerichtet sind, insgesamt wenigstens zwei Distanzen (d1, d2) zu zwei verschiedenen Punkten des Bauroboters (12) zu messen.

6. Baumaschinensystem (10) nach einem der vorhergehenden Patentansprüche, **dadurch gekennzeichnet, dass** der Distanzmesser (36, 42) eingerichtet ist, eine Distanz (d1, d2) parallel zur Lichtebene (E) zu messen.

7. Baumaschinensystem (10) nach einem der vorhergehenden Patentansprüche, **dadurch gekennzeichnet, dass** der Distanzmesser (36, 42) eingerichtet ist, eine Distanz (d1, d2) zu einem der Lichtsensoren (24, 26, 28) zu messen.

8. Baumaschinensystem (10) nach einem der vorhergehenden Patentansprüche **dadurch gekennzeichnet, dass** wenigstens einer der Lichtsensoren (24, 26, 28) ein Zeilenlichtsensor und / oder ein Flächenlichtsensor ist.

9. Baumaschinensystem (10) nach einem der vorhergehenden Patentansprüche, **dadurch gekennzeichnet, dass** die Fahrplattform (16) eingerichtet ist, einen Neigungswinkel einzustellen.

10. Baumaschinensystem (10) nach einem der vorhergehenden Patentansprüche, **dadurch gekennzeichnet, dass** wenigstens eine Lage und / oder Position der Steuerungsvorrichtung (14) fernsteuerbar ist.
